Europäisches Patentamt

(19) European Patent Office

Office européen des brevets

(11) Publication number: **0 326 725 B1**

(12) # EUROPEAN PATENT SPECIFICATION

(45) Date of publication of patent specification :
04.12.91 Bulletin 91/49

(51) Int. Cl.⁵ : **F16G 13/06, B65G 39/20**

(21) Application number : **88300835.1**

(22) Date of filing : **01.02.88**

(54) **A roller chain.**

(43) Date of publication of application :
09.08.89 Bulletin 89/32

(45) Publication of the grant of the patent :
04.12.91 Bulletin 91/49

(84) Designated Contracting States :
**DE FR GB IT**

(56) References cited :
**DE-B- 1 033 129
FR-A- 608 954
GB-A- 1 060 229
GB-A- 1 258 753
PATENT ABSTRACTS OF JAPAN, vol. 11, no.
172 (M-595)[2619], 3rd June 1987; & JP-A-62
4122 (TSUBAKIMOTO CHAIN CO.) 10-01-1987
Idem**

(73) Proprietor : **TSUBAKIMOTO CHAIN CO.
17-96, Tsurumi 4-chome Tsurumi-ku
Osaka-shi (JP)**

(72) Inventor : **Kotegawa, Katsumi
17-88, Tsurumi 4-chome
Tsurumi-ku Osaka-shi (JP)**
Inventor : **Kanehira, Makoto
17-88, Tsurumi 4-chome
Tsurumi-ku Osaka-shi (JP)**

(74) Representative : **Meddle, Alan Leonard et al
FORRESTER & BOEHMERT
Widenmayerstrasse 4/I
W-8000 München 22 (DE)**

EP 0 326 725 B1

## Description

THIS INVENTION relates to improvements in or relating to roller chains.

The most frequently used roller chains, particularly for use as conveyor chains, allow the rollers to rotate while slidingly contacting guides or the like.

For example, Japanese Specification JP-A-624122 discloses a roller chain comprising a roller rotatably mounted on a bush which interconnects a pair of oppositely disposed inner link plates, and a pair of thrust rings made of bearing material and each disposed between a respective end face of the roller and a respective inner link plate, each thrust ring presenting a sealing portion preventing flow of lubricant or intrusion of foreign matter through a radial gap defined between the thrust ring and the roller or the bush, each end of the roller being formed with a cylindrical recess which is coaxial with the bush and communicates with the interior space of the roller.

In roller chains having such a construction, the resistance in the running direction can indeed be reduced as a result of the roller rotating on the bush on which the roller is mounted, but mitigation of the resistance attributable to transverse loading cannot be expected because the transverse load acting on the roller is designed to be borne by the sliding contact of end faces of the roller with the inner faces of the link plates interconnected by the bush.

Thus, the conventional roller chains have had an inadequate capacity for bearing a transverse load. Moreover, the conventional roller chains present the problem that lubricant stored in the interior of the rollers tends to flow out easily, and foreign matter intrudes into the interior of the rollers to wear away both the rollers and the bushes, thereby shortening the life of the chain. Such a problem brings upon itself, notably in the case of a chain in which the roller contains a plurality of rolls distributed around the bush, a sort of catastrophe where the roller chain rapidly becomes unusable as a result of the rotating faces of the rolls being damaged as a consequence of the efflux of the above-mentioned lubricant or the intrusion of the foreign matter.

An object of this invention is to provide a roller chain which has the ability not only to sustain the transverse load applied to the roller but also to prevent the intrusion of foreign matter into the interior of the roller and the efflux of the lubricant therefrom.

Accordingly, the present invention provides a roller chain comprising a roller rotatably mounted on a bush which interconnects a pair of oppositely disposed inner link plates, and a pair of thrust rings made of bearing material and each disposed between a respective end face of the roller and a respective inner link plate, each thrust ring presenting a sealing portion preventing flow of lubricant or intrusion of foreign matter through a radial gap defined between the thrust ring and the roller or the bush, each end of the roller being formed with a cylindrical recess which is coaxial with the bush and communicates with the interior space of the roller, which roller chain is characterised in that an axial gap (g) is defined between one radial face of each thrust ring and the respective end face of the roller, and the one radial face of each ring is formed with an annular projection fitting into the respective cylindrical recess in the roller to constitute the said sealing portion of the thrust ring preventing flow of lubricant or intrusion of foreign matter through a radial gap defined between the annular projection of the thrust ring and the roller, the annular projection having an axial extent which is greater than the combined axial extent of the two axial gaps between the thrust rings and the respective end faces of the roller.

In one form of the invention, each thrust ring is fixed to the respective end of the roller, an axial gap is defined between each thrust ring and the respective inner link plate, and an inner peripheral portion of each thrust ring constitutes the sealing portion of the thrust ring preventing flow of lubricant to the interior space of the roller through a radial gap defined between the inner peripheral portion and the bush.

In order that the invention may be readily understood, embodiments thereof will now be described, by way of example, with reference to the accompanying drawings, in which :

Figure 1 is a sectional view showing a first embodiment of roller chain according to this invention;

Figure 2 is an exploded view in perspective of a portion of the embodiment of Figure 1 to better illustrate the construction of the roller chain ;

Figure 3 is an enlarged sectional view showing a sealing portion of the roller chain ;

Figure 4 is a sectional view illustrating the working of the chain ;

Figure 5 is a sectional view showing a second embodiment of the invention ;

Figure 6 is a sectional view showing a third embodiment of the invention ;

Figure 7 is an exploded view in respective of a portion of the embodiment of Figure 6 ; and

Figure 8 is a sectional view showing a fourth embodiment of the invention.

In the following description like reference numerals identify like parts of the different embodiments.

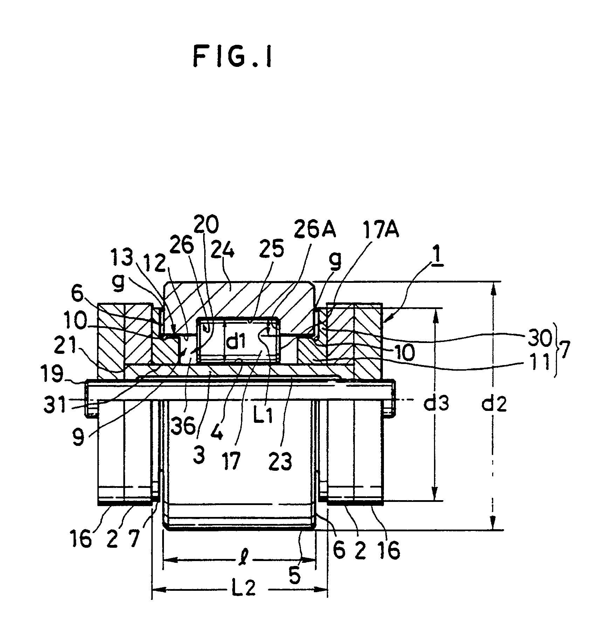

Referring to Figure 1 to 4, a roller chain 1 comprises a roller 5 located around the outer circumference 4 of a bush 3 which interconnects oppositely disposed inner link plates 2, 2. A pair of thrust rings 7, 7 are mounted on the bush 3 and are each located between a respective end face 6 of the roller 5 and the respective link plate 2 with a small axial gap g therebetween.

The roller 5 has bearing recesses 9, 9 in respective end faces of the roller which are concentric with the axial centreline of the roller. Each thrust ring 7 is formed with an axially extending annular projection 11 on its inner face 10 confronting the roller 5, which project has an axial extent greater than the combined axial extent of the small gaps g, g and is received in the aperture 9. The projection 11 is provided with a sealing region 13 able to prevent lubricant flow through the radial gap between the projection 11 and the periphery of the recess 9.

In this example, the roller chain 1 is used as a conveyor, while the roller 5 takes the form of a roller containing a plurality of rolls 17 having their axis arranged in parallel with the axis of the bush 3.

The inner link plate 2 and an outer link plate 16 are made of punched steel plate and are of the same shape, having semicircular ends. The oppositely disposed inner link plates 2, 2 are connected by the bush 3 which is press-fitted tightly into the hole 21 located at a pitch point.

The outer link plates 16, 16 are located outside the inner link plates 2, 2 with their pitch points being alternately in coincidence. A pin 19 passes through the bush 3 and has each end press-fitted into the pitch hole of a respective outer link plate 16, so that the link plates 2, 2, 16, 16 are pivotally connected to each other. An enlarged central portion 23 of the bore of the bush 3 forms a reservoir for lubricant from which the lubricant is supplied into the clearance between the bush 3 and the pin 19.

The roller 5 in this example is possessed both of a plurality of rolls 17 which are distributed around the periphery of the bush 3 and of a cylindrical hollow roller body 24 enclosing the rolls 17. Each of the rolls 17 is in the shape of a cylindrical rod having a length which is shorter than the axial extent of the roller body 24, and in this example, the rolls 17 are arranged with their axes parallel to the centreline of the bush 3 and are packed around the outer circumferential face of the bush 3 in contact with one another.

The roller body 24 takes the form of a cylinder having a coaxial bore 20 which opens onto the end faces 6, 6 of the cylinder at the bearing recesses 9. A central region 26 of the bore 20 is enlarged to form a chamber 26 for receiving the rolls 17. The chamber 26 has a cylindrical wall 25 surrounding and encircling the rolls 17 which are arranged around the bush 3 in contact therewith. The rolls 17 are axially located by radially extending annular walls 26A of the chamber. The radial extent L1 of the walls 26A is set at a value which is greater than 30% of the internal diameter d1 of the roll 17. The external diameter d2 of the roller body 24 is greater than the width of the inner link plate 2. On the other hand, the length $\ell$ of the roller body 24 is less than the distance L2 between the inner link plates 2, 2. As a result, an axial gap for receiving the thrust ring 7, 7 is formed between each end of the roller 5 and the respective inner link plates 2, 2.

In this way, the roller 5 has the rolls 17 located inside the roller body 24, and the bore 20 of the body 24 forms the bearing recess 9 at the respective end faces 6, 6 of the roller 5.

The thrust ring 7 comprises a radially extending bearing portion 30 which lies in the gap between the inner face of the inner link plate 2 and the end face 6 of the roller 5, and the axially extending annular projection 11 which projects from the inner face 10 of the bearing portion 30 confronting the end face 6 of the roller 5.

The thrust ring 7 is made of a durable bearing material having low frictional properties, for example, synthetic resin, such as fluororesin, acetal resin, phenol resin, and the like, oleo-sintered metal, ceramics and steel subjected to a surface-hardening treatment like the nitriding treatment, the cementation treatment, or the like.

The disc-like bearing portion 30 is slightly thinner than the width of the axial gap between the roller 5 and the link plate 2 and has a central hole 31 into which the bush 3 is insertable. Consequently, the thrust ring 7 can be located between the roller and the inner link plate 2 with the small gap g. In this connection, it does not matter whether the ring 7 is floatingly fitted on the bush 3 or statically situated thereon. The outer diameter d3 of the part 30 is set at the nearly same size as the width of the inner link plate 2.

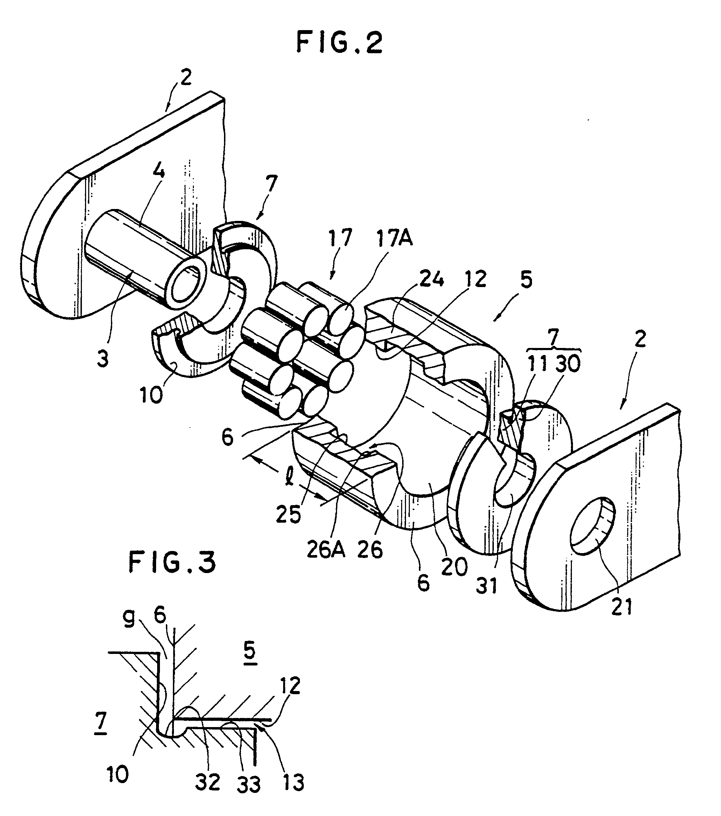

As shown in detail in Figure 3, the projection 11 is a muff body which is inserted into the bearing recess 9, where in the this example a muff surface 33 is provided with a groove 32 adjacent to the radial face 10, the surface 33 sealing the interior of the roller 5 as a result of the small gap lying between the muff surface 33 and the confronting inner circumferential face 12 of said roller 5 being small enough to preclude the flow of lubricant therethrough.

On the other hand, by making the muff surface 33 project for an axial distance greater than the combined axial extent of the gaps g and g existing at the ends of the roller 5, the sealing region 13 is of greater axial extent than the axial extent of the small gaps g and g added together.

By disposing the thrust ring 7 between the roller 5 and the inner link plate 2, it is possible to form a lubricant filled space 36 which is limited by the radial end face of the projection 11 of the thrust ring 7, the bore 20 of the roller 5, the outer circumferential surface of the bush 3, and the end faces 17A of the rolls 17, and which communicates with the gaps between the rolls 17.

This lubricant-filled space 36 is isolated from outside by the sealing region 13 so as to prevent the efflux of the lubricant and the entry of dust into the space 36.

The roller chain 1 is assembled as follows. The rolls 17 are located in the chamber 26, being in contact with the inner circumferential surface of the roller body 24 beforehand. And the bush 3 projecting from one inner link plate 2 and having on thrust ring 7 thereon is inserted into the bore-like portion formed by rolls 17 disposed in an annular configuration within chamber 26. The other thrust ring is then mounted on the bush 3 and the bush is press-fitted into the other inner link plate 2. As a result, an inner link having the roller 5 is assembled. Thereafter, the outer link plates 16 are connected with the inner link by pressing the pin 19 through the bush 3.

As described above, the roller 5 is positioned by the inner link plate 2 along with the bearing part 30 of the thrust ring 7, whereby transverse slippage is prevented, the force in the transverse direction working between the roller 5 and the inner link plate 2 can be borne by the latter so as to heighten the resisting force against transverse loading. On the other hand, the thrust ring 7 mitigates the frictional resistance and reduces abrasion in the course of such transverse loading by using suitable bearing materials. Further, in the roller of this device, a large quantity of lubricant, such as for example grease, can be introduced into its lubricant space 36 and, since this lubricant-filled space 36 is cut-off from the outside by the sealing region 13, there occurs neither efflux of the lubricant from the space 36 nor the intrustion of dust and dirt thereinto, wherefore abrasion is mitigated for a long period of time, the durability of the chain is increased, and the life thereof is prolonged.

Furthermore, the provision of the small gap g between the inner face 10 of the thrust ring 7 and the end face 6 of the roller 5 means that the roller 5 can rotate lightly while diminishing the tractive force when the load acts only in the direction of the onward movement, thereby making it possible to follow the rail easily and for the conveyance to be smooth.

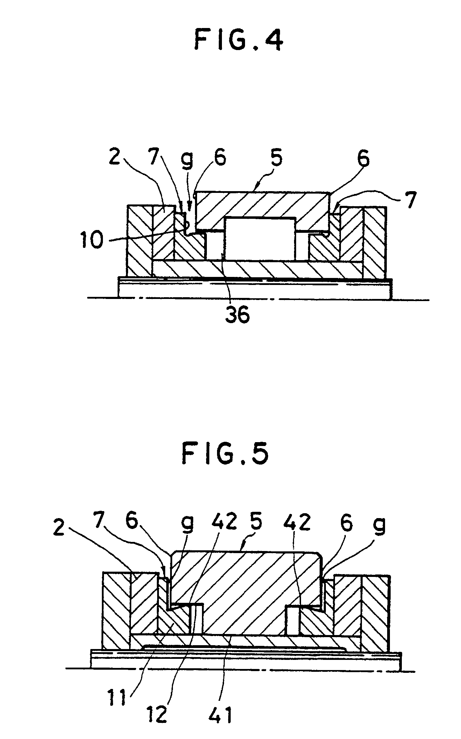

As shown in Figure 4, even when the roller 5 becomes inclined, the axial extent of the sealing region 13 is such that the region 13 still always cuts the lubricant-filled space 36 off from the outside. The groove 32 adajcent the sealing region 13 serves to provide the labyrinth effect to enhance the action of the sealing region in preventing leakage of the lubricant.

A second embodiment of the invention is shown in Figure 5.

In this second embodiment a bore 41 of the roller 5 contacts the outer circumference of the bush 3, the bore 41 being enlarged adjacent each of the end faces 6 of the roller 5 to form the respective bearing recesses 9 having cylindrical faces 12 which are larger in diameter than the diameter of the bush-receiving central portion of the bore 41.

The thrust ring 7 is made of elastic, low friction synthetic resinous material, for example nylon. The circumferential surface 42 of the annular projection 11, which is wider than the total width of the two gaps g, flares inwardly of the recess 9. By making the maximum diameter of the flared surface 42 a little larger than the diameter of the cylindrical surface 12, the surface 42 slidably engages the surface 12 by elastic deformation of the thrust ring, thereby forming the sealing region 13 which isolates the interior of the roller 5 from the outside.

The flared thrust ring can also be made by forming its main body from a rigid bearing material, such as ceramics, and attaching thereto a flared sleeve made of elastic bearing material.

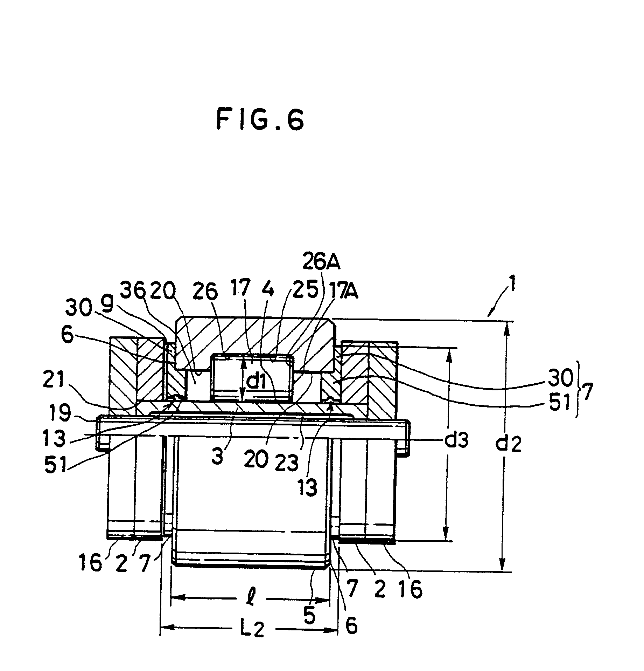

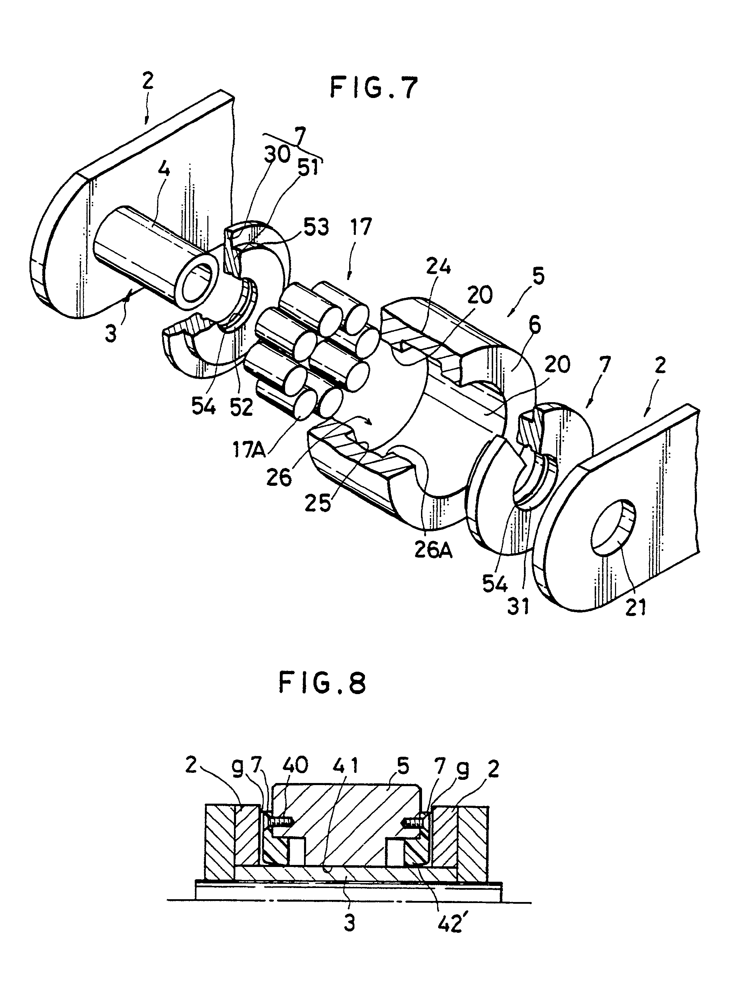

Figures 6 and 7 illustrate a third embodiment of the invention in which each thrust ring 7 comprises a radially extending disc-like bearing portion 30, and an axially extending annular projection 51 which fits adheringly into the bearing recess 9 defined by the respective end of the bore 20 of the roller body 24.

The bearing portion 30 is slightly thinner than the width of the axial gap between the end face of the roller 5 and the inner link plate 2, so that a slight gap is left between the bearing portion 30 and the inner face of the inner link plate.

The projection 51 has an inner surface 52 which continues the hole 31 of the bearing portion 30 and an outer surface 53 which is adapted to be press-fitted into the axial bore 20 of the roller 5.

The surface 52 is formed with an annular groove 54 and forms a sealing region 13 able to prevent lubricant flow through the radial gap between the surface 52 and the outer surface of the bush 3. A space 36 which can be filled with lubricant is thus formed, which space 36 is bounded by the inner end face of the projection 51 of the thrust ring 7, the surface of the bore 20 of the roller 5, the circumferential surface 4 of the bush 3 and the end faces of the rolls 17. This lubricant-filled space is cut-off from outside by the sealing region 13. Even if the roller 5 leans to one side and an axial gap is produced between the inner bush plate and one of the thrust rings, the gap existing between the surface 52 and the surface of the bush 3 is unchanged and the sealing effect of the region 13 is retained. The groove 54 provides a labyrinth effect which enhances the sealing effect in the region 13.

A fourth embodiment of the invention is shown in Figure 8.

In this embodiment, the central bore 41 of the roller 5 slidingly receives the bush 3. The thrust ring 7 is made of a resilient material, such as nylon, and is attached to the end face 6 of roller 5 by means of screw 40. The thrust ring 7 has an annular projection 51 with a flared portion 42' having a minimum diameter which is slightly smaller than the diameter of the bush 3, so that the thrust ring slidably engages the surface 4 of the bush 3 by elastic deformation of the thrust ring, thereby forming the sealing region 13 which isolates the interior of the roller 5 from the outside.

As described above, a roller chain embodying this invention has thrust rings made of bearing material interposed between the end faces of the roller and the inner link plate with a small gap therebetween, the thrust ring having a projecting portion received in a recess at the end face of the roller to form a sealing region preventing lubricant-flow, so that the roller rotates lightly by virtue of the thrust ring being spaced from the end face of the roller or the inner link plate ; the running resistance of the chain can be diminished; the transmission capacity of the chain is enlarged ; the thrust force acting on the roller can be sustained by the inner link plate ; and it is possible remarkably to increase the durability against the transverse load. Further, the sealing effect is maintained even when the roller slips transversely, so that is is always possible to prevent the intrusion of foreign matter into the inside of the roller and the efflux of the lubricant therefrom and, more than that, the life and the durability of the chain can be prolonged.

What is more, because the thrust ring provides both bearing support for the thrust load and the sealing function at the same time, as mentioned above, the thrust ring of this device is simplified in construction and less costly, as compared with the case where separate members performing the respective functions are provided.

## Claims

1. A roller chain comprising a roller (5) rotatably mounted on a bush (3) which interconnects a pair of oppositely disposed inner link plates (2), and a pair of thrust rings (7) made of bearing material and each disposed between a respective end face (6) of the roller (5) and a respective inner link plate (2), each thrust ring (7) presenting a sealing portion (13) preventing flow of lubricant or intrusion of foreign matter through a radial gap defined between the thrust ring (7) and the roller (5) or the bush (3), each end of the roller (5) being formed with a cylindrical recess (9) which is coaxial with the bush (3) and communicates with the interior space (26) of the roller (5), which roller chain is characterised in that an axial gap (g) is defined between one radial face (10) of each thrust ring (7) and the respective end face (6) of the roller (5), and the one radial face (10) of each ring (7) is formed with an annular projection (11) fitting into the respective cylindrical recess (9) in the roller (5) to constitute the said sealing portion (13) of the thrust ring (7) preventing flow of lubricant or intrusion of foreign matter through a radial gap defined between the annular projection (11) of the thrust ring (7) and the roller (5), the annular projection (11) having an axial extend which is greater than the combined axial extend of the two axial gaps (9) between the thrust rings (7) and the respective end faces (6) of the roller (5).

2. A roller chain according to claim 1, wherein each thrust ring (7) is formed with an annular groove (32) at the junction of its one radial face (10) and the annular projection (11).

3. A roller chain according to claim 1, wherein the annular projection (11) of each thrust ring (7) is flared (42) and contacts the surface of the respective cylindrical recess (9) in the roller (5) by resilient deformation of the annular projection (11).

4. A roller chain according to claim 1, wherein each thrust ring (7) is fixed to the respective end (6) of the roller (5), an axial gap (g) is defined between each thrust ring (7) and the respective inner link plate (2), and an inner peripheral portion (52) of each thrust ring (7) constitutes the sealing portion (13) of the thrust ring (7) preventing flow of lubricant to the interior space of the roller through a radial gap defined between the inner peripheral portion (52) and the outer surface (4) of the bush (3).

5. A roller chain according to claim 4, wherein the inner peripheral portion (52) of the thrust ring (7) is formed with an annular groove (54).

6. A roller chain according to claim 4, wherein the inner peripheral portion (52) of the thrust ring (7) flares (42') axially of the thrust ring (7) and engages the bush (3) by resilient deformation of the inner peripheral portion (52).

7. A roller chain according to any preceding claim, wherein the roller (5) comprises a plurality of rolls (17) packed around the circumference (4) of the bush (3) and a hollow roller body (24) enclosing the rolls (17).

## Patentansprüche

1. Rollenkette, mit einer Rolle (5), die drehbar auf einer Buchse (3) angebracht ist, welche ein Paar einander gegenüber angeordneter innerer Verbindungslaschen (2) verbindet, und einem Paar Laufringe (7), hergestellt aus Lagermaterial und jeder zwischen einer jeweiligen Endfläche (6) der Rolle (5) und einer entsprechenden inneren Verbindungslasche (2) angeordnet, wobei jeder Laufring (7) einen Dichtabschnitt (13) darstellt, welcher den Fluß von Schmiermittel oder den Einflug von Fremdstoffen durch einen radialen Spalt, welcher zwischen dem Laufring (7) und der Rolle (5) oder der Buchse (3) definiert ist, verhindert, wobei jedes Ende der Rolle (5) mit einer zylindrischen Ausnehmung (9) versehen ist, welche koaxial mit der Buchse (3) ist und mit dem Innenraum (26) der Rolle (5) kommuniziert, wobei die Rollenkette dadurch gekennzeichnet ist, daß ein axialer Spalt (g) zwischen einer Radialfläche (10) jedes Laufrings (7) und der entsprechenden Endfläche (6) der Rolle (5) definiert ist und daß eine Radialfläche (10) jedes Ringes (7) mit einem ringförmigen Vorsprung (11) versehen ist, der in die jeweilige zylindrische Ausnehmung (9) in der Rolle (5) eingepaßt ist, um den Dichtabschnitt (13) des Laufringes (7), welcher den Fluß von Schmiermittel oder den Einflug von Fremdstoffen durch einen radialen Spalt, der zwischen dem ringförmigen Vorsprung (11) des Laufringes (7) und der Rolle (5) definiert ist, verhindert, wobei der ringförmige Vorsprung (11) eine axiale Erstreckung hat, welche größer ist als die kombinierte axiale Erstreckung der zwei axialen Spalte (9) zwischen den Laufringen (7) und den jeweiligen Endflächen (6) der Rolle (5).

2. Rollenkette nach Anspruch 1, bei der jeder Laufring (7) mit einer ringförmigen Nut (32) an der Verbindung seiner einen Radialfläche (10) und dem ringförmigen Vorsprung (11) ausgebildet ist.

3. Rollenkette nach Anspruch 1, bei der der ringförmige Vorsprung (11) jedes Laufrings (7) konisch erweitert ist (42) und die Oberfläche der jeweiligen zylindrischen Ausnehmung (9) in der Rolle (5) durch federnde Deformation des ringförmigen Vorsprungs (11) kontaktiert.

4. Rollenkette nach Anspruch 1, bei der jeder Laufring (7) an dem entsprechenden Ende (6) der Rolle (5) befestigt ist, ein axialer Spalt (g) zwischen jedem Laufring (7) und der jeweiligen inneren Verbindungslasche (2) definiert ist und ein innerer Umfangsbereich (52) jedes Laufringes (7) den Dichtabschnitt (13) des Laufringes (7), der den Fluß von Schmiermittel in den Innenraum der Rolle durch einen radialen Spalt verhindert, der zwischen dem inneren Umfangsbereich (42) und der Außenfläche (4) der Buchse (3) definiert ist, bildet.

5. Rollenkette nach Anspruch 4, bei der der innere Umfangsbereich (52) des Laufrings (7) mit einer ringförmigen Nut (54) ausgebildet ist.

6. Rollenkette nach Anspruch 4, bei der der innere Umfangsbereich (52) des Laufringes (7) sich axial zu Laufring (7) konisch erweitert (42) und mit der Buchse (3) durch federnde Deformation des inneren Umfangsabschnitts (52) in Eingriff ist.

7. Rollenkette nach einem der vorangehenden Ansprüche, bei dem die Rolle (5) eine Vielzahl von Rollen (17), die um den Außenumfang (4) der Buchse (3) gepackt sind, und einen hohlen Rollenkörper (24), der die Rollen (17) einschließt, aufweist.

## Revendications

1. Une chaîne à rouleau comprenant un rouleau (5) monté en rotation sur une bague (3) qui relie une paire de plaques de liaison intérieures (2) disposées face à face, et une paire d'anneaux de poussée (7) fabriqués en matériau pour palier et disposés chacun entre une face extrême respective (6) du rouleau (5) et une plaque de liaison intérieure (2), chaque anneau de poussée (7) présentant une partie étanche (13) empêchant l'écoulement de lubrifiant ou l'intrusion de corps étrangers à travers un interstice radial défini entre l'anneau de poussée (7) et le rouleau (5) ou la bague (3), chaque extrémité du rouleau (5) étant formée avec une cavité cylindrique (9) qui est coaxiale à la bague (3) et communique avec l'espace intérieur (26) du rouleau (5), laquelle chaîne à rouleau est caractérisée en ce qu'un interstice axial (g) est défini entre une face radiale (10) de chaque anneau de poussée (7) et la face extrême respective (6) du rouleau (5), et une seule face radiale (10) de chaque anneau (7) comporte une saillie annulaire (11) s'emboîtant dans la cavité cylindrique respective (9) du rouleau (5) pour constituer ladite partie étanche (13) de l'anneau de poussée (7) empêchant l'écoulement de lubrifiant ou l'intrusion de corps étrangers à travers un interstice radial défini entre la saillie annulaire (11) de l'anneau de poussée (7) et le rouleau (5), la saillie annulaire (11) ayant une étendue axiale qui est plus grande que l'étendue axiale combinée des deux interstices axiaux (g) entre les anneaux de poussée (7) et les faces extrêmes respectives (6) du rouleau (5).

2. Une chaîne à rouleau conforme à la revendication 1, dans laquelle chaque anneau de poussée (7) comporte une rainure annulaire (32) à la jonction de sa seule face radiale (10) et de la saillie annulaire (11).

3. Une chaîne à rouleau conforme à la revendication 1, dans laquelle la saillie annulaire (11) de chaque anneau de poussée (7) est évasée (42) et est en contact avec la surface de la cavité cylindrique (9) dans le rouleau (5) par déformation élastique de la saillie annulaire (11).

4. Une chaîne à rouleau conforme à la revendication 1, dans laquelle chaque anneau de poussée (7) est fixé à l'extrémité respective (6) du rouleau (5), un interstice axial (g) est défini entre chaque anneau de poussée (7) et la plaque de liaison intérieure respective (2), et une partie périphérique intérieure (52) de chaque anneau de poussée (7) constitue la partie étanche (13) de l'anneau de poussée (7) empêchant l'écoulement de lubrifiant vers l'espace intérieur du rouleau à travers un interstice radial défini entre la partie périphérique intérieure (52) et la surface externe (4) de la bague (3).

5. Une chaîne à rouleau conforme à la revendication 4, dans laquelle la partie périphérique intérieure (52) de l'anneau de poussée (7) comporte une rainure annulaire (54).

6. Une chaîne à rouleau conforme à la revendication 4, dans laquelle la partie périphérique intérieure (52) de l'anneau de poussée (7) s'évase axiallement (42') de l'anneau de poussée (7) et s'engage dans la bague (3) par déformation élastique de la partie périphérique intérieure (52).

7. Une chaîne à rouleau conforme à une revendication quelconque précédente, dans laquelle le rouleau (5) comprend une pluralité de cylindres (17) distribués autour de la circonférence (4) de la bague (3) et un corps de rouleau creux (24) renfermant les cylindres (17).

# FIG.1

# FIG.2

# FIG.3

EP 0 326 725 B1

# FIG.4

# FIG.5

9

# FIG.6

# FIG.7

# FIG.8